# EUROPÄISCHE PATENTSCHRIFT

(11) **EP 2 754 163 B1**
(45) Veröffentlichungstag und Bekanntmachung des Hinweises auf die Patenterteilung: **05.08.2015**
(21) Anmeldenummer: 12750732.5
(22) Anmeldetag: 09.08.2012
(51) Int. Cl.: H01H 9/00, G05F 1/147

(54) **MOTORANTRIEB ZUR BETÄTIGUNG EINES STUFENSCHALTERS**
MOTOR DRIVE FOR ACTUATING A STEP SWITCH
ENTRAÎNEMENT MOTORISÉ POUR ACTIONNER UN CHANGEUR DE PRISES EN CHARGE

(30) Priorität: 07.09.2011 DE 102011112748
(43) Veröffentlichungstag der Anmeldung: 16.07.2014
(73) Patentinhaber: Maschinenfabrik Reinhausen GmbH, 93059 Regensburg (DE)
(72) Erfinder: BIERINGER, Alfred, 94333 Geiselhöring (DE); HECHTL, Marco, 92536 Pfreimd (DE); SCHMECKEBIER, Mario, 93057 Regensburg (DE)
(86) Internationale Anmeldenummer: PCT/EP2012/065600
(87) Internationale Veröffentlichungsnummer: WO 2013/034384

(56) Entgegenhaltungen:
- WO-A1-2011/029494
- DE-A1- 10 315 204
- DE-A1-102008 019 472
- DE-C1- 19 546 215

## Beschreibung

Die Erfindung betrifft einen Motorantrieb zur Betätigung eines Stufenschalters mit Mitteln zur Drehmomenterfassung.

Aus der Patentschrift DE 197 44 465 C1 ist bereits bekannt, dass ein sehr großes Interesse daran besteht, Stufenschalter während des gesamten Zeitraums einer Lastumschaltung zu überwachen, um dadurch eine ordnungsgemäße Funktion gewährleisten zu können. Dies wird üblicherweise durch die Erfassung des Drehmomentverlaufs, einer Positionserfassung der jeweils aktuellen Stellung des Stufenschalters und dem Vergleich der ermittelten Wertepaare, mit vorab gespeicherten Werten, realisiert. Der Drehmomentverlauf wird dabei bei jeder Lastumschaltung mit Hilfe der Effektivwerte des Stromes und der Spannung über die Wirkleistung des Antriebs ermittelt.

Die internationale Patentanmeldung WO 2011/029494 A1 offenbart einen Prüfantrieb zur Überprüfung eines Stufenschalters oder eines Umstellers im Rahmen von Transformatorprüfungen. Der Prüfantrieb besitzt einen Servomotor, der über ein Getriebe auf einen Adapter wirkt, der während der Prüfungen mit der oberen Getriebestufe des Stufenschalters oder Umstellers verbindbar ist.

Aus der Offenlegungsschrift DE 103 15 204 A1 ist bereits Verwendung von AOW-Sensoren bekannt. Die AOW-Sensoren werden bei Stufenschaltern im Rahmen der kontinuierlichen Erfassung von Betriebszuständen während der Umschaltung des Stufenschalters und/oder im Rahmen der sporadischen Erfassung von Verschleißzuständen in Verbindung mit Inspektionsmaßnahmen an Stufenschaltern benutzt. Die AOW-Sensoren sind im Innern des Stufenschalters an verschiedenen Positionen angebracht.

Die Patentschrift DE 195 46 215 C1 offenbart ein Schaltstellungsanzeigesystem für elektrische, mechanisch betriebene Schaltgeräte. Dies wird durch mindestens ein Oberflächenwellenelement (OFW-Element) und ein mit diesem wechselwirkendes Hochfrequenzabfragegerät realisiert. Sie sind jeweils an Elementen des Schaltgerätes befestigt, die im Schaltfall gegeneinander bewegt werden. Das Hochfrequenzabfragegerät kann zwecks Kommunikation mit einer Kontrolleinheit mit einer Antenne verbunden sein, die sich entweder innerhalb des Kapselungsgehäuses oder an der Außenseite des Kapselungsgehäuses befindet.

Die Offenlegungsschrift DE 10 2008 019 472 A1 offenbart eine Vakuumpumpe mit einem Pumpenstator und einen Pumpenrotorf. Der Pumpenrotor enthält einen Transponder, der über einen Reader des Pumpenstators auslesbar ist. Der Pumpenrotor enthält ferner Sensoren zur Ermittlung von Betriebsdaten und einen Speicher. Der Speicher speichert entweder eine Historie der gemessenen Betriebsdaten oder eine Lebensdauerkennzahl. Auf diese Weise wird der Verschleißgrad des jeweiligen Rotors ermittelt und in dem Rotor gespeichert. Somit enthält der Rotor sämtliche wartungsrelevanten Informationen. Auch wenn der Rotor in eine andere Vakuumpumpe eingesetzt wird, bleibt die rotorbezogene Information in ihm enthalten.

Üblicherweise treibt ein Elektromotor den Stufenschalter über ein Lastgetriebe, ein Kegelradgetriebe und eine Schneckengetriebe an. Diese Getriebe sind durch Wellen miteinander verbunden und weisen unterschiedliche Übersetzungsverhältnisse und Wirkungsgrade auf. Beide Faktoren haben einen Einfluss auf den gemessenen Drehmomentverlauf.

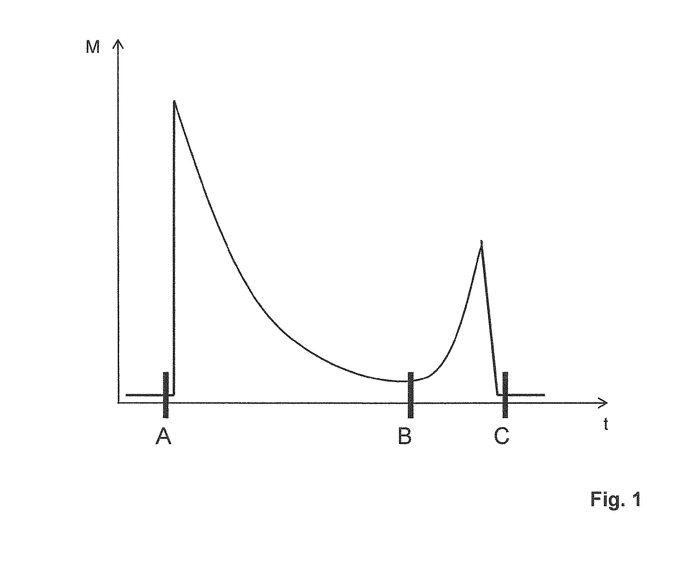

Einen besonders großen Einfluss auf den Wirkungsgrad des Lastgetriebes hat die Temperatur. Da dieses als Riemengetriebe ausgebildet ist, kommt es bei hohen Temperaturen dazu, dass der Riemen durchrutscht, der Wirkungsgrad sinkt und der Drehmomentverlauf verfälsch wird. Auch bei Betriebstemperaturen unter 0° Celsius stellt das Riemengetriebe eine große Fehlerquelle dar. Fig. 1 zeigt einen vereinfachten, typischen Drehmomentverlauf, gemessen am Motorantrieb eines ersten Schaltvorgangs bei -20° Celsius. Die Abszisse bildet die Zeit t und die Ordinate das Drehmoment M ab. Zeitpunkt A kennzeichnet den Beginn des Schaltvorgangs. Ab diesem Zeitpunkt steigt das Drehmoment zunächst sehr stark an. Dies hängt vor allem damit zusammen, dass der Riemen des Getriebes sehr kalt und zäh ist und der Motor zunächst diesen Widerstand überwinden muss. Auch die Schmiermittel im Schnecken- und Kegelgetriebe bilden bei diesen Temperaturen einen Wiederstand; dieser ist im Vergleich zu dem des Riemens sehr klein. Nach dem Überwinden der ersten Widerstände sinkt das Drehmoment bis zum Zeitpunkt B. Zwischen den Zeitpunkten B und C steigt der Drehmomentverlauf zum zweiten Mal an. Dabei erreicht dieser jedoch nicht denselben Wert wie zu Beginn des Schaltvorganges.

Dieser Anstieg hängt damit zusammen, dass der Kraftspeicher kurz vor dem Auslösen mehr Energie zum endgültigen Spannen der Feder benötigt. Nach dem Auslösen des Kraftspeichers und dem damit verbundenen Umschaltvorgang sinkt das Drehmoment bis zum Zeitpunkt C, welcher das Ende des Schaltvorgangs darstellt.

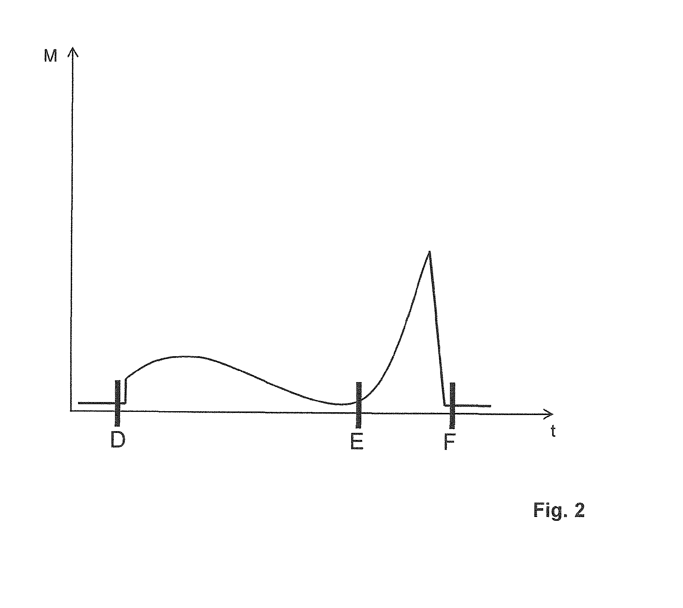

Während der zweite, durch den Kraftspeicher verursachte, Anstieg charakteristisch für den Drehmomentverlauf einer Umschaltung ist, ist der Erste, zwischen den Zeitpunkten A und B, stets temperaturabhängig und somit unbeständig und nicht berechenbar. Besonders deutlich ist dies in Fig. 2 zu erkennen. Hier ist der gemessene Drehmomentverlauf nach 30 aufeinander folgenden Schaltungen abgebildet. Leicht feststellbar ist das Fehlen des ersten, stark ausgeprägten Anstiegs des Drehmomentes zwischen den Zeitpunkten D und E. Dies hängt vor allem damit zusammen, dass der Riemen des Lastgetriebes eine Betriebstemperatur erreicht hat und somit weniger Leistung vom Antrieb benötigt wird, was sich wiederum im Drehmomentverlauf wiederspiegelt. Deutlich zu erkennen ist auch, dass die Verläufe der Kurven zwischen den Zeitpunkten E und F vergleichbar mit denen zwischen B und C sind. Somit kann festgestellt werden, dass Temperaturschwankungen einen geringen Einfluss auf den Kraftspeicher haben.

Um Funktionsstörungen, wie z.B. den Bruch einer Welle oder eines Bauteils im Kraftspeicher feststellen zu können, werden den einzelnen Zeitabschnitten Grenzwerte zugeteilt. Die Überschreitung dieser Grenzwerte wird als Fehler interpretiert. Auf Grund der starken Schwankungen zu Beginn der Schaltvorgänge müssen die Grenzwerte sehr hoch eingestellt werden, damit die ersten Schaltungen nicht als fehlerhaft eingestuft werden. Sobald aber alle Teile eine Betriebstemperatur erreicht haben, ist der Grenzwert zu hoch, so dass Fehler unterhalb der Grenzwerte nicht mehr detektierbar sind.

Nachteilig beim Stand der Technik ist auch, dass alle in der Antriebseinheit verbauten Getriebe einen Einfluss auf die Messfehler haben. Diese werden durch die Produkte der einzelnen Wirkungsgrade und Übersetzungsverhältnisse bestimmt und können bei Temperaturänderungen stark schwanken. Dies gilt insbesondere für die Werte des Lastgetriebes.

Eine weitere Fehlerquelle bei der Ermittlung des Drehmomentverlaufs über die Wirkleistung des Antriebes, stellt der Antrieb selbst dar. Da die Einzelteile dieser Antriebe weltweit bezogen werden, können die Hersteller keine Geräte mit konstanten Kennwerten liefern. Somit müssen auch diese Schwankungen berücksichtigt werden um genaue Messergebnisse gewährleisten zu können.

Aufgabe der Erfindung ist es, einen Motorantrieb mit Mitteln zur Drehmomenterfassung bereitzustellen, wobei die Drehmomenterfassung zuverlässig funktioniert, genauere Messergebnisse liefert und den Temperatureinfluss berücksichtigt, um dadurch die auf die Messfehler wirkenden Faktoren des Lastgetriebes zu eliminieren.

Die Aufgabe wird durch einen Motorantrieb mit Mitteln zur Drehmomenterfassung für einen Stufenschalter mit den Merkmalen des ersten Anspruches gelöst.

Der Erfindung liegt die allgemeine Idee zu Grunde, die Drehmomenterfassung näher hin zum Stufenschalter anzuordnen, die Messungen temperaturunabhängiger zu machen und die Faktoren des Lastgetriebes auszuschließen.

Die Erfindung soll nachfolgend anhand von Figuren erläutert werden.

Es zeigen:
- Fig. 1: einen typischen Drehmomentverlauf an einem Motorantrieb bei einem Schaltvorgang bei -20°C nach längerem Stillstand
- Fig. 2: einen typischen Drehmomentverlauf an einem Motorantrieb bei einem Schaltvorgang bei -20°C nach 30 Schaltungen
- Fig. 3: einen erfindungsgemäßen Motorantrieb mit einem Lastgetriebe, Steuergetriebe, Antriebsmotor und Mitteln zur Drehmomenterfassung

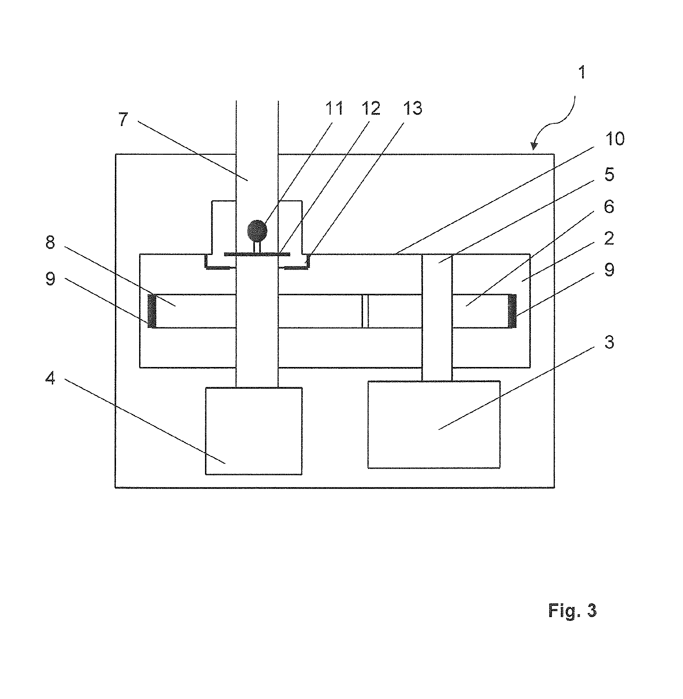

In Fig. 3 ist ein Motorantrieb 1 mit einem Lastgetriebe 2, einem Antriebsmotor 3 und einem Steuergetriebe 4 dargestellt. Im Inneren des Lastgetriebes 2 befindet sich eine erste, vom Antriebsmotor 3 angetriebene, Antriebswelle 5 die mit einer ersten Antriebsscheibe 6 mechanisch verbunden ist. Desweiteren befindet sich ebenfalls im Inneren des Lastgetriebes 2 eine zweite Antriebswelle 7, die mit einer zweiten Antriebsscheibe 8 mechanisch verbunden ist. Die zweite Antriebswelle 7 treibt außerdem das Steuergetriebe 4 und einen hier nicht dargestellten Stufenschalter an. Antriebswelle 7 ist mit dem Stufenschalter über einen, ebenfalls nicht dargestellten, Antriebszug verbunden.

Die Antriebsscheiben 6, 8 sind über einen Riemen 9 verbunden, sodass es zu einer Übertragung der Drehbewegung, ausgehend vom Antriebsmotor 3, kommt. Die, nicht dargestellten, für die Lagerung der Antriebswellen 5, 7 benötigten Mittel z.B. Kugellager sind am Gehäuse 10 angebracht oder mit integriert.

Auf der zweiten Antriebswelle 7 ist mindestens ein funkabfragbarer Oberflächenwellensensor 11 angebracht. Bei diesem handelt es sich um einen sog. funkabfragbaren Oberflächenwellensensor (SAW-Sensor). Der funkabfragbare Oberflächenwellensensor 11 ist leitend mit einer Rotorantenne 12 verbunden. Diese ist radial ausgebildet und mechanisch mit der Antriebswelle 7 verbunden. Zur Rotorantenne 12 ist eine axial beabstandete, scheibenförmig radial ausgebildete, Statorantenne 13 angeordnet. Die Statorantenne 13 ist fest im Gehäuse 10 platziert. Die Energie- und Datenübertragung erfolgt elektromagnetisch über die Rotorantenne 12 und die Statorantenne 13.

Besonders vorteilhaft ist das Wegfallen des Lastgetriebes bei den Messungen des Drehmomentverlaufs. Die Messung am Ausgang des Lastgetriebes ermöglicht genauere Fehleranalysen, die weniger von Temperaturen beeinflussbar sind. Zusätzlich fallen die Faktoren Wirkungsgrad und Übersetzungsverhältnis des Lastgetriebes, welche Einfluss auf die Messfehler haben, weg. Auch der Fehlerfaktor Motor braucht nicht mehr berücksichtigt werden. Zusätzlich müssen sich die mit der Zeit ändernden Toleranzen, sowie die Abnutzung der mechanischen Teile des Lastgetriebes, nicht berücksichtigt werden. Die berührungslose Energie- und Datenübertragung ist im Vergleich zu Schleifkontakten oder direkten Verbindungen nahezu wartungsfrei.

Zusätzlich ist es möglich, mit dem funkabfragbaren Oberflächenwellensensor 11 auch die Temperatur der Antriebswelle 7 zu erfassen. Dadurch lassen sich die Messwerte des Drehmomentverlaufs durch einen temperaturabhängigen Faktor korrigieren. Man erhält genauere Werte und folglich mehr Sicherheit bei der Überwachung von Lastumschaltungen.

### Bezugszeichenliste

- 1: Motorantrieb
- 2: Lastgetriebe
- 3: Antriebsmotor
- 4: Steuergetriebe
- 5: Antriebswelle
- 6: Antriebsscheibe
- 7: Antriebswelle
- 8: Antriebsscheibe
- 9: Riemen
- 10: Gehäuse
- 11: funkabfragbarer Oberflächenwellensensor
- 12: Rotorantenne
- 13: Statorantenne

## Patentansprüche

1. Motorantrieb (1) zur Betätigung eines Stufenschalters,
wobei dieser einen Antriebsmotor (3) aufweist, der ein Lastgetriebe (2) und ein Steuergetriebe (4) antreibt,
wobei das Lastgetriebe (2) eine erste Antriebswelle (5) mit einer mit ihr mechanisch verbundenen ersten Antriebsscheibe (6) aufweist, die mit dem Antriebsmotor (3) verbunden ist, und eine zweite Antriebswelle (7) mit einer mit ihr verbundenen zweiten Antriebsscheibe (8) aufweist, die mit dem Stufenschalter über einen Antriebszug und dem Steuergetriebe (4) verbunden ist,
wobei die Antriebsscheiben (6, 8) über einen Riemen (9) miteinander verbunden sind und wobei das Lastgetriebe (2) ein Gehäuse (10) aufweist,
**dadurch gekennzeichnet,**
**dass** Mittel zur Drehmomenterfassung vorgesehen sind, die aus mindestens einem funkabfragbaren Oberflächenwellensensor (11), einer Rotorantenne (12) und einer Statorantenne (13) bestehen, wobei der mindestens eine funkabfragbare Oberflächenwellensensor (11) auf der zweiten Antriebswelle (7) befestigt ist,
**dass** die leitend mit dem mindestens einen funkabfragbaren Oberflächenwellensensor (11) verbundene Rotorantenne (12) an der zweiten Antriebswelle (7) befestigt ist;
**dass** die axial zur Rotorantenne (12) beabstandete Statorantenne (13) im Gehäuse (10) fest angeordnet ist und
**dass** Mittel zur Drehmomenterfassung vom Gehäuse (10) umgeben sind.

2. Motorantrieb (1) zur Betätigung eines Stufenschalters nach Anspruch 1,
**dadurch gekennzeichnet,**
**dass** die Statorantenne (13) scheibenförmig radial ausgebildet und zur Rotorantenne (12) axial beabstandet, angeordnet ist.

3. Motorantrieb (1) zur Betätigung eines Stufenschalters nach Anspruch 1 bis 2,
**dadurch gekennzeichnet,**
**dass** das Lastgetriebe (2) als Kegelgetriebe, Schneckengetriebe oder Zahnradgetriebe ausgebildet ist.

4. Motorantrieb (1) zur Betätigung eines Stufenschalters nach Anspruch 1 bis 3,
**dadurch gekennzeichnet,**
**dass** die Energie- und Datenübertragung elektromagnetisch über die Rotorantenne (12) und die Statorantenne (13) erfolgt, derart, dass sie berührungslos in den mindestens einen funkabfragbaren Oberflächenwellensensor (11) einkoppelbar ist.

5. Motorantrieb (1) zur Betätigung eines Stufenschalters nach einem der Ansprüche 1 bis 4,
**dadurch gekennzeichnet,**
**dass** der mindestens eine funkabfragbare Oberflächenwellensensor (11) zusätzlich die Temperatur der zweiten Antriebswelle (7) erfasst.

## Claims

1. Motor drive (1) for actuating a tap changer,
wherein this comprises a drive motor (3) which drives a load transmission (2) and a control transmission (4),
wherein the load transmission (2) comprises a first drive shaft (5) with a first drive pulley (6), which is mechanically connected therewith and which is connected with the drive motor (3), and a second drive shaft (7) with a second drive pulley (8), which is connected therewith and which is connected with the tap changer by way of a drive train and the control transmission (4),
wherein the drive pulleys (6, 8) are connected together by way of a belt (9) and
wherein the load transmission (2) comprises a housing (10),
**characterised in that**
means for torque detection are provided, which consist of at least one surface-wave sensor (11), which can be interrogated by radio, a rotor antenna (12) and a stator antenna (13), wherein the at least one surface-wave sensor (11) interrogatable by radio is attached to the drive shaft (7),
the rotor antenna (12), which is conductively connected with the at least one surface-wave sensor (11) interrogatable by radio, is attached to the drive shaft (7),
the stator antenna (13), which is axially spaced from the rotor antenna (12), is fixedly arranged in the housing (10) and
the means for torque detection are enclosed by the housing (10).

2. Motor drive (1) for actuating a tap changer according to claim 1, **characterised in that** the stator antenna (13) is of disc-shaped radial construction and is arranged to be radially spaced from the rotor antenna (12).

3. Motor drive (1) for actuating a tap changer according to claim 1 or 2, **characterised in that** the load transmission 92) is constructed as a bevel gear transmission, worm transmission or gearwheel transmission.

4. Motor drive (1) for actuating a tap changer according to claim 1 to 3, **characterised in that** the energy and data transmission takes place electromagnetically by way of the rotor antenna (12) and the stator antenna (13) in such a way that it can be contactlessly coupled into the at least one surface-wave sensor (11) interrogatable by radio.

5. Motor drive (1) for actuating a tap changer according to any one of claims 1 to 4, **characterised in that** the at least one surface-wave sensor (11) interrogatable by radio additionally detects temperature.

## Revendications

1. Entraînement motorisé (1) pour permettre d'actionner un commutateur à gradins,
cet entraînement motorisé comprenant un moteur d'entraînement (3) qui entraîne une transmission de charge (2) et une transmission de commande (4),
la transmission de charge (2) comprenant un premier arbre d'entraînement (5) auquel est relié mécaniquement un premier disque d'entraînement (6) et qui est relié au moteur d'entraînement (3), et un second arbre d'entraînement (7) auquel est relié un second disque d'entraînement (8) et qui est relié au commutateur à gradins par l'intermédiaire d'un élément de traction et à la transmission de commande (4),
les disques d'entraînement (6, 8) étant reliés entre eux par une courroie (9) et la transmission de charge (2) comprenant un boîtier (10), **caractérisé en ce qu'**
il est prévu des moyens permettant de détecter le couple de rotation qui sont constitués d'au moins un capteur d'ondes de surface pouvant être interrogé à distance (11), d'une antenne de rotor (12) et d'une antenne de stator (13), le capteur d'ondes surfacique pouvant être interrogé à distance (11) étant fixé sur le second arbre d'entraînement (7), l'antenne de rotor (12) qui est reliée de façon conductrice au capteur d'ondes de surface pouvant être interrogé à distance (11) est fixée sur le second arbre d'entraînement (7),
l'antenne de stator (13) qui est située à distance axiale de l'antenne de rotor (12) est montée rigidement dans le boîtier (10), et
les moyens permettant de détecter un couple de rotation sont entourés par le boîtier (10).

2. Entraînement motorisé (1) pour permettre d'actionner un commutateur à gradins conforme à la revendication 1,
**caractérisé en ce que**
l'antenne de stator (13) est réalisée radialement en forme de disque et est située à distance axiale de l'antenne de rotor (12).

3. Entraînement motorisé (1) pour permettre l'actionnement d'un commutateur à gradins conforme à la revendication 1 ou 2,
**caractérisé en ce que**
la transmission de charge (2) est réalisée sous la forme d'une transmission conique, d'une transmission à vis sans fin ou d'une transmission par engrenage.

4. Entraînement motorisé (1) pour permettre l'actionnement d'un commutateur à gradins conforme à l'une des revendications 1 à 3,
**caractérisé en ce que**
la transmission d'énergie et de données est effectuée par voie électromagnétique par l'intermédiaire de l'antenne de rotor (12) et de l'antenne de stator (13) de sorte qu'elle puisse être accouplée sans contact dans le capteur d'ondes surfaciques pouvant être interrogé à distance (11).

5. Entraînement motorisé (1) pour permettre l'actionnement d'un commutateur à gradins conforme à l'une des revendications 1 à 4,
**caractérisé en ce que**
le capteur d'ondes surfaciques pouvant être interrogé à distance (11) détecte en outre la température du second arbre d'entraînement (7).
